# FASCICULE DE BREVET EUROPEEN

(11) **EP 0 588 715 B1**
(45) Date de publication et mention de la délivrance du brevet: **09.04.1997**
(21) Numéro de dépôt: 93402243.5
(22) Date de dépôt: 15.09.1993
(51) Int. Cl.: B60Q 1/076, B60Q 1/068

(54) **Projecteur comportant un dispositif correcteur et des moyens de réglage du zéro du dispositif correcteur**
Scheinwerfer mit Korrektureinheit und Rückstelleinrichtung
Headlamp with correction unit and reset device

(30) Priorité: 17.09.1992 FR 9211101
(43) Date de publication de la demande: 23.03.1994
(73) Titulaire: VALEO VISION, 93000 Bobigny (FR)
(72) Inventeur: Ravier, Jean-Paul, F-94100 St Maur des Fosses (FR); Penet, Jean-Claude, F-77400 Lagny/Marne (FR); Metayer, Guy, F-92150 Suresnes (FR); Le Quinio, Hervé, F-75015 Paris (FR); Pinson, Chislaine, F-92390 Villeneuve la Garenne (FR); Billot, Gérard, F-93370 Montfermeil (FR); Reynal, Alain, F-93130 Noisy le Sec (FR); Bolis, Jean, F-93470 Coubron (FR)
(74) Mandataire: Martin, Jean-Jacques

(56) Documents cités:
- EP-A- 0 484 938
- DE-A- 2 339 837
- DE-A- 2 630 068
- DE-U- 7 414 276

## Description

La présente invention a trait d'une façon générale à la correction de l'orientation des faisceaux lumineux émis par les projecteurs de véhicules automobiles.

Elle concerne plus particulièrement un projecteur pour véhicule automobile, comprenant, à l'intérieur d'un boîtier de projecteur, d'une part un réflecteur muni d'une lampe pour former un faisceau lumineux, et d'autre part un dispositif correcteur motorisé relié au réflecteur par un moyen de liaison, afin de faire varier l'inclinaison notamment en site dudit faisceau par rapport à une inclinaison de référence, notamment en fonction des variations d'assiette du véhicule, Un moyen, actionnable manuellement, étant prévu pour translater le dispositif correcteur de manière à amener le faisceau dans son inclinaison de référence lorsque le dispositif correcteur n'est pas en service.

On connaît déjà par le document DE-A-38 44 269 et le document DE-U-7 414 276 des projecteurs dans chacun desquels le dispositif correcteur est monté à pivotement à l'intérieur du boîtier, et il est prévu des moyens actionnables manuellement pour faire tourner le dispositif correcteur afin d'effectuer, lorsqu'il n'est pas en service, le réglage de l'orientation du faisceau sur une orientation de référence au moyen d'une coopération de type vis-écrou.

Une telle solution connue présente cependant un certain nombre d'inconvénients.

En particulier, le montage rotatif du dispositif correcteur confère à l'ensemble du projecteur un encombrement important en profondeur. En outre, un tel agencement inclut nécessairement des moyens de conversion de mouvement pour transformer la rotation impartie lors du réglage manuel en une translation d'une partie du réflecteur sur lequel le dispositif correcteur agit. En corrollaire, le dispositif correcteur ainsi conçu ne se prête pas à une utilisation comme module standard pour équiper des projecteurs différents.

En outre, on connaît par le document DE-A-2 339 837 un projecteur sans boîtier comportant un dispositif correcteur et des moyens actionnables manuellement montés sur une partie de la carroserie du véhicule permettant d'agir par pivotement sur le dispositif correcteur.

Dans le document DE-A-2 339 837 tout comme dans le document EP-A-0 484 938, il est prévu des moyens actionnables manuellement permettant de translater le dispositif correcteur pour effectuer la mise à zéro de celui-ci par coulissement selon une direction horizontale.

Chacun des montages de mise à zéro par translation horizontale décrits dans les deux documents précités, comporte une sortie sur la paroi arrière du projecteur, ce qui oblige à intervenir par l'arrière du projecteur pour effectuer le réglage de référence. Une telle intervention ne peut s'opérer facilement et rapidement.

La présente invention vise à pallier les inconvénients de la technique antérieure, et en particulier à réaliser le réglage de l'orientation de base du faisceau à l'aide de moyens particulièrement simples, économiques et fiables, et à faciliter la standardisation du dispositif correcteur.

Elle concerne à cet effet un projecteur du type mentionné plus haut, caractérisé en ce que le dispositif correcteur est monté coulissant suivant une direction verticale de coulissement dans le boîtier de projecteur et en ce que ledit moyen, actionnable manuellement, s'étendant dans ladite direction verticale de coulissement coopére directement avec un organe relié au dispositif correcteur, pour déplacer en translation ledit organe selon ladite direction verticale de coulissement et par là même ledit dispositif correcteur.

La description qui va suivre en regard des dessins annexés, donnés à titre d'exemples non limitatifs, fera bien comprendre en quoi consiste l'invention et comment elle peut être réalisée.

La figure 1a est une vue partielle de côté en coupe verticale longitudinale d'un premier mode de réalisation du projecteur selon l'invention.

La figure 1b est une vue en coupe selon le plan A-A du projecteur de la figure 1a.

La figure 2a est une vue partielle de côté en coupe verticale longitudinale d'un deuxième mode de réalisation du projecteur selon l'invention.

La figure 2b est une vue en coupe selon le plan B-B du projecteur de la figure 2a.

La figure 2c est une vue en coupe selon le plan C-C du projecteur de la figure 2b.

La figure 3a est un schéma de détail d'un troisième mode de réalisation du projecteur selon l'invention.

La figure 3b est une vue en coupe selon le plan D-D de la figure 3a.

La figure 3c est un schéma de détail d'une variante de réalisation du projecteur de la figure 3a.

La figure 4 est un schéma de détail d'un quatrième mode de réalisation du projecteur selon l'invention.

La figure 5a est une vue de côté en coupe verticale longitudinale d'un cinquième mode de réalisation du projecteur selon l'invention.

La figure 5b est une vue de dessus de la figure 5a.

La figure 6a est une vue de détail du moyen de transmission du projecteur de la figure 5a.

La figure 6b est une première variante de réalisation du moyen de transmission de la figure 6a.

La figure 6c est une vue en coupe selon le plan E-E de la figure 6a.

La figure 6d est une deuxième variante de réalisation de la figure 6a.

La figure 7a est une vue partielle de côté en coupe verticale longitudinale d'un troisième mode de réalisation du moyen de transmission du projecteur selon l'invention.

La figure 7b est une vue de dessus de la figure 7a.

La figure 8a est une vue de côté en coupe verticale longitudinale d'une variante de réalisation de la figure 5a.

La figure 8b est une vue de dessus de la figure 8a.

La figure 9a est une vue partielle d'un autre mode de réalisation du projecteur selon l'invention.

La figure 9b est une vue en coupe selon le plan F-F de la figure 9a.

La figure 10a est une vue de côté d'une variante de réalisation du projecteur de la figure 9a.

La figure 10b est une vue de dessus de la figure 10a.

On notera préliminairement que, d'une figure à l'autre, des éléments ou parties identiques ou similaires ont été désignés dans la mesure du possible par les mêmes signes de référence, et ne seront pas décrits à chaque fois.

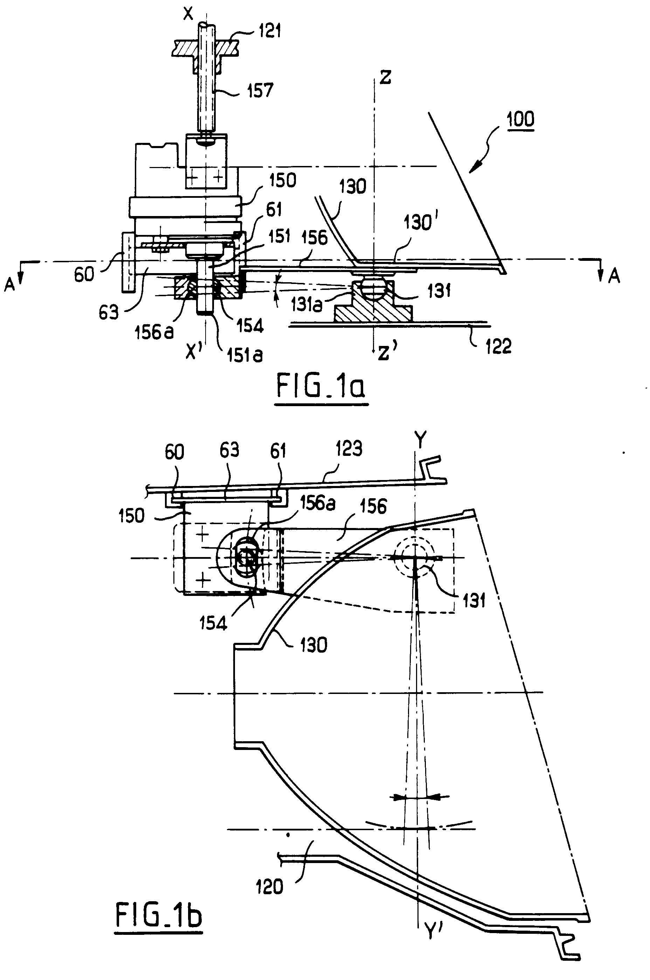

En référence aux figures 1a et 1b, on a représenté partiellement un projecteur 100 pour véhicule automobile comportant un boîtier de projecteur 120 fermé à l'avant par une glace transparente. Le boîtier de projecteur 120 abrite un réflecteur 130 coopérant avec une lampe (non représentée sur ces figures) pour former un faisceau lumineux. Le réflecteur 130 est monté ici sur une rotule 131 à tête sphérique logée dans un siège de rotule 131a de forme complémentaire et dont la base est solidaire de la paroi inférieure 122 du boîtier 120. On autorise ainsi le réflecteur 130 à pivoter notamment autour d'un axe horizontal Y-Y' et d'un axe vertical Z-Z', les deux axes Y-Y' et Z-Z' passant par le centre de la tête sphérique de ladite rotule 131. Dans l'exemple des figures 1a et 1b, la rotule 131 solidaire du réflecteur 130, est positionnée en dessous de la joue inférieure 130' dudit réflecteur dans une région déportée latéralement par rapport au centre du réflecteur.

En outre, le projecteur 100 comprend un module ou dispositif correcteur 150 motorisé par exemple au moyen d'un moteur électrique et positionné dans le boîtier de projecteur 120 à l'arrière du réflecteur 130. Ce dispositif correcteur 150, relié par un moyen de liaison au réflecteur 130, est destiné à faire varier l'inclinaison du faisceau lumineux en site. Plus particulièrement, comme on peut le voir sur la figure la, le dispositif correcteur 150 comporte en sortie un arbre rotatif 151 qui s'étend ici verticalement suivant un axe X-X' et dont la longueur est telle que son extrémité inférieure 151a se trouve à une hauteur voisine de celle de la rotule 131. L'arbre rotatif 151 est fixe en translation par rapport au dispositif correcteur 150. En outre, l'arbre rotatif 151 comporte un filetage extérieur. Sur les figures 1a et 1b, on observe également des moyens de transmission montés à l'extérieur du dispositif correcteur 150 entre l'arbre de sortie et le réflecteur, pour convertir la rotation dudit arbre en une variation d'inclinaison du réflecteur.

Suivant le mode de réalisation représenté sur les figures 1a et 1b, les moyens de transmission comprennent une patte 156 qui s'étend horizontalement entre l'arbre de sortie et la base du réflecteur. En particulier, l'une des extrêmités de la patte 156 est solidaire du réflecteur 130, maintenu entre la joue inférieure 130' de ce dernier et la tête de la rotule 131. L'autre extrémité de la patte 156 comporte une ouverture transversale 156a de forme oblongue qui s'étend généralement perpendiculairement à l'axe longitudinal de la patte 156. Les moyens de transmission comprennent également un écrou 154 inséré dans un logement prévu dans l'épaisseur de la patte au droit de l'ouverture, de telle manière qu'il puisse coulisser latéralement dans ledit logement tout en étant bloqué en rotation et solidaire de la patte 156 en translation verticale. L'arbre rotatif 151 fileté est vissé dans l'écrou 154 à travers l'ouverture 156a. Ainsi lorsque l'arbre rotatif 151 est entraîné en rotation par le dispositif correcteur 150, l'écrou 154 se déplace suivant l'axe X-X' sur le filetage extérieur de l'arbre et entraîne la patte 156 solidaire, dans un mouvement généralement vertical. La patte 156 fait alors pivoter autour de l'axe Y-Y' le réflecteur 130 afin de régler l'inclinaison en site du faisceau lumineux.

Il convient de préciser que de manière générale l'écrou 154 est placé de façon centrale dans son logement, mais le fait qu'il puisse coulisser transversalement dans celui-ci autorise un léger débattement de la patte 156 par rapport à l'arbre de sortie 151 ce qui autorise le pivotement du réflecteur autour de l'axe vertical Z-Z' pour le réglage du faisceau en azimut.

Par ailleurs, on observe sur les figures 1a et 1b que le dispositif correcteur 150 est monté sur un support 63 coulissant suivant l'axe X-X' dans des glissières 60,61 solidaires ici d'une paroi latérale 123 du boîtier de projecteur 120. En outre, le projecteur comporte un moyen actionnable manuellement pour translater le dispositif correcteur 150 selon sa direction de coulissement. Ce moyen de translation permet d'amener le faisceau dans son inclinaison de référence (réglage du zéro) lorsque ledit dispositif correcteur est à l'arrêt.

Dans l'exemple de la figure la, le moyen de translation du dispositif correcteur 150 est une tige filetée 157 qui s'étend à l'intérieur du boîtier de projecteur suivant l'axe X-X' et dont l'extrémité inférieure est montée rotative sur une patte du dispositif correcteur. Cette tige filetée 157 est d'autre part vissée dans un taraudage formé dans la paroi supérieure 121 du boîtier de projecteur 120 en faisant saillie à l'extérieur dudit boîtier, d'où elle peut être manoeuvrée. Lorsqu'on visse et dévisse la tige filetée 157, celle-ci s'enfonce à l'intérieur du boîtier ou bien au contraire remonte à l'extérieur de ce dernier, en déplaçant verticalement le dispositif correcteur 150 qui coulisse dans les glissières 60,61. Le déplacement vertical dudit dispositif correcteur entraîne le déplacement suivant l'axe X-X' de la patte 156, ce qui permet de faire pivoter le réflecteur 130 autour de l'axe Y-Y' afin de modifier l'inclinaison en site du faisceau lumineux pour l'amener dans son inclinaison de référence. En outre, la tige filetée 157 permet de bloquer en coulissement le dispositif correcteur dans les glissières une fois le réglage du zéro effectué.

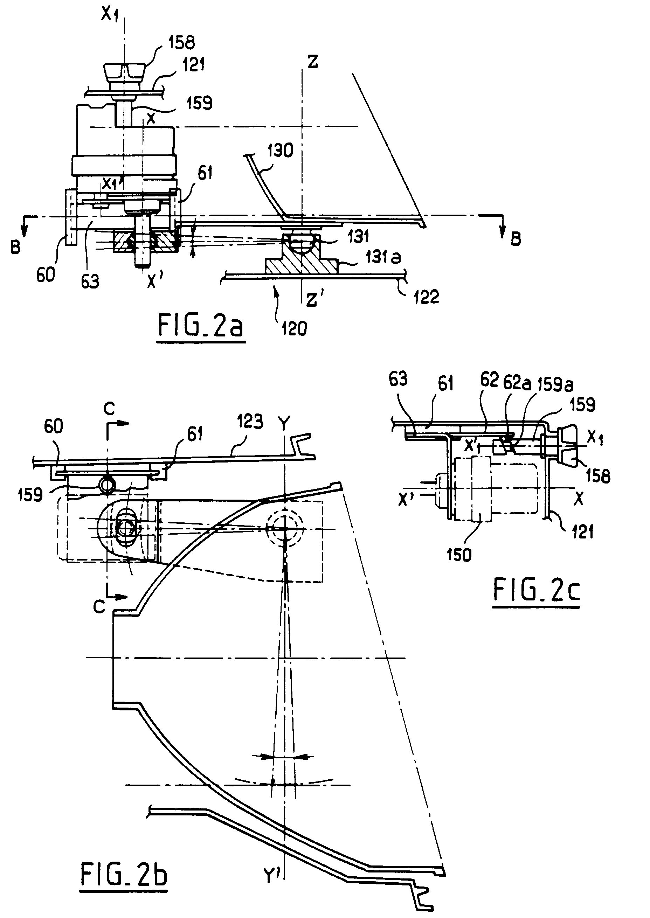

Sur les figures 2a, 2b et 2c, on observe une première variante de réalisation du moyen de translation du dispositif correcteur 150. Suivant cette variante, le moyen de translation comprend une tige cylindrique de révolution 159 montée de façon tournante sur la paroi supérieure du boîtier de projecteur 120. Dans l'exemple des figures 2a, 2b et 2c, la tige cylindrique 159 comporte à son extrémité supérieure une molette 158 située à l'extérieur du boîtier de projecteur. Cette molette 158 actionnable manuellement est mobile en rotation autour d'un axe vertical X₁-X'₁ tout en restant fixe verticalement, et permet d'entraîner en rotation la tige cylindrique 159. La tige cylindrique 159 s'étend verticalement à l'intérieur du boîtier de projecteur 120 suivant l'axe vertical X₁-X'_{1,} décalé latéralement par rapport à l'axe X-X' le long d'un prolongement vertical 62 de la paroi de support 63 du dispositif correcteur, placée parallèlement à la paroi latérale 123. En outre, la tige cylindrique 159 comporte sur sa surface extérieure une gorge de préférence hélicoïdale 159a dans laquelle est inséré un doigt 62a solidaire du prolongement vertical 62 de la paroi de support du dispositif correcteur 150. Ce doigt 62a glisse à l'intérieur de la gorge hélicoïdale de la tige cylindrique 159 qui forme une rampe. Lorsque la tige est entraînée en rotation par l'intermédiaire de la molette, la paroi de support 63 du dispositif correcteur qui coulisse dans les glissières 60,61 et de ce fait déplace verticalement suivant l'axe X'-X' le dispositif correcteur lui-même. Ici encore, la tige cylindrique 159 permet une fois le réglage du zéro effectué de bloquer le dispositif correcteur dans les glissières 60,61.

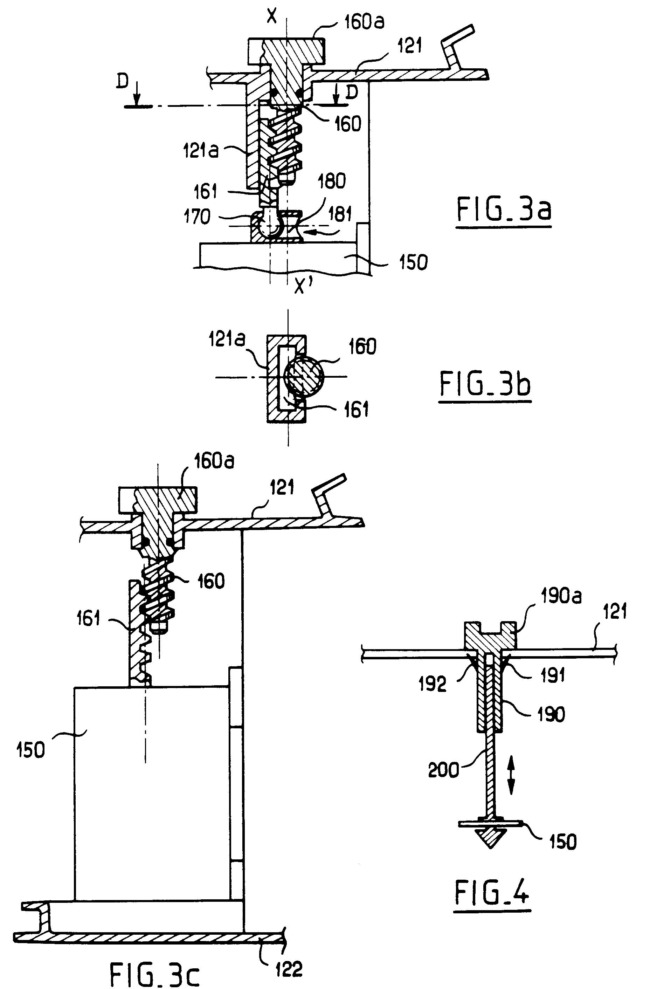

Sur les figures 3a et 3b, on a représenté une deuxième variante de réalisation du moyen de translation du dispositif correcteur 150. Conformément à ce mode de réalisation, le moyen de translation comporte une vis sans fin 160 qui s'étend verticalement selon l'axe X-X' à l'intérieur du boîtier de projecteur 120 et qui est montée tournante dans la paroi supérieure 121 du boîtier par l'intermédiaire de sa tête de vis plate 160a placée à l'extérieur dudit boîtier de projecteur 120. En outre, le moyen de translation comporte une crémaillère 161 verticale solidaire du dispositif correcteur 150 et qui coopère avec la vis sans fin 160. Ainsi lorsqu'on tourne la vis sans fin 160, la crémaillère 161 se déplace dans la direction longitudinale de ladite vis, ce qui permet de déplacer verticalement le dispositif correcteur coulissant dans les glissières 60,61. On peut également bloquer en coulissement ledit dispositif correcteur par blocage en rotation de la vis sans fin 160. Dans l'exemple des figures 3a et 3b, la crémaillère 161 comporte à son extrémité inférieure une tête 170 présentant une forme de préférence sphérique. Par ailleurs, le dispositif correcteur 150 comporte en partie supérieure un logement récepteur 180 qui s'étend horizontalement et qui comprend une ouverture terminale 181 ici tournée vers l'avant du projecteur. Lors de la mise en place du dispositif correcteur 150 horizontalement à l'intérieur du boîtier, la tête sphérique 170 de la crémaillère 161 vient s'engager dans le logement récepteur 180 à travers l'ouverture 181. Cet ensemble tête sphérique 170 et logement récepteur 180 autorise un montage et démontage rapide du dispositif correcteur dans le boîtier de projecteur. En outre, la crémaillère 161 est guidée dans un élément vertical 121a formé à partir de la matière de la paroi supérieure du boîtier. Cet élément 121a est un conduit creux allongé, de forme cylindrique à section rectangulaire, qui comprend une ouverture longitudinale sur un de ses côtés, dans laquelle s'engage partiellement la vis sans fin 160. L'élément 121a permet de retenir la crémaillère, y compris lorsque le dispositif correcteur est démonté.

Selon une variante représentée sur la figure 3c, la crémaillère 161 est solidaire du dispositif correcteur 150. Dans ce cas, la crémaillère 121a et le boîtier du dispositif correcteur 150 peuvent être réalisés d'un seul tenant.

Sur la figure 4, on a représenté un quatrième mode de réalisation du moyen de translation du dispositif correcteur 150. Suivant ce mode de réalisation, le moyen de translation comprend une tige taraudée longitudinalement 190 qui s'étend verticalement à l'intérieur du boîtier de projecteur 120 et qui est montée sur le boîtier de façon tournante par l'intermédiaire d'une tête 190a de forme circulaire, placée à l'extérieur du boîtier et munie d'une fente apte à recevoir un outil tel qu'un tournevis pour faire tourner ladite tête manuellement. Par ailleurs, comme on peut le voir sur la figure 4, le moyen de translation comprend une tige filetée 200 verticale montée de façon non tournante sur le dispositif correcteur 150. Cette tige verticale filetée 200 peut par exemple être soudée sur le dispositif correcteur 150 ou bien encore être formée d'une seule pièce avec le corps du dispositif correcteur 150. En outre, la tige filetée 200 est vissée à l'intérieur du taraudage de la tige taraudée 190, de telle sorte que lorsqu'on tourne la tête 190a de la tige taraudée 190, la tige filetée 200 se déplace verticalement à l'intérieur du taraudage de ladite tige taraudée. Le blocage en rotation de la tige taraudée permet de bloquer en coulissement ledit dispositif correcteur. D'autre part, la tige taraudée 190 comporte des dents de verrouillage 191, 192 disposées en épi sur sa surface extérieure en dessous de la tête 190a. Lors du montage, le vissage de la tige taraudée 190 sur la tige filetée 200 amène les dents de verrouillage 191, 192 à franchir un trou de passage de la tige taraudée 190 prévu dans la paroi supérieure 121 du boîtier, puis à s'épanouir élastiquement contre ladite paroi à l'intérieur du boîtier afin de verrouiller verticalement la tige taraudée à l'intérieur dudit boîtier.

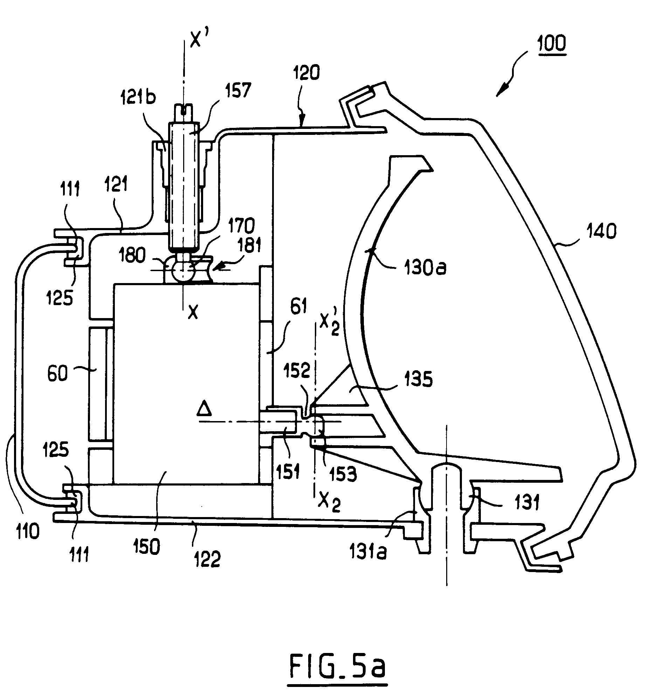

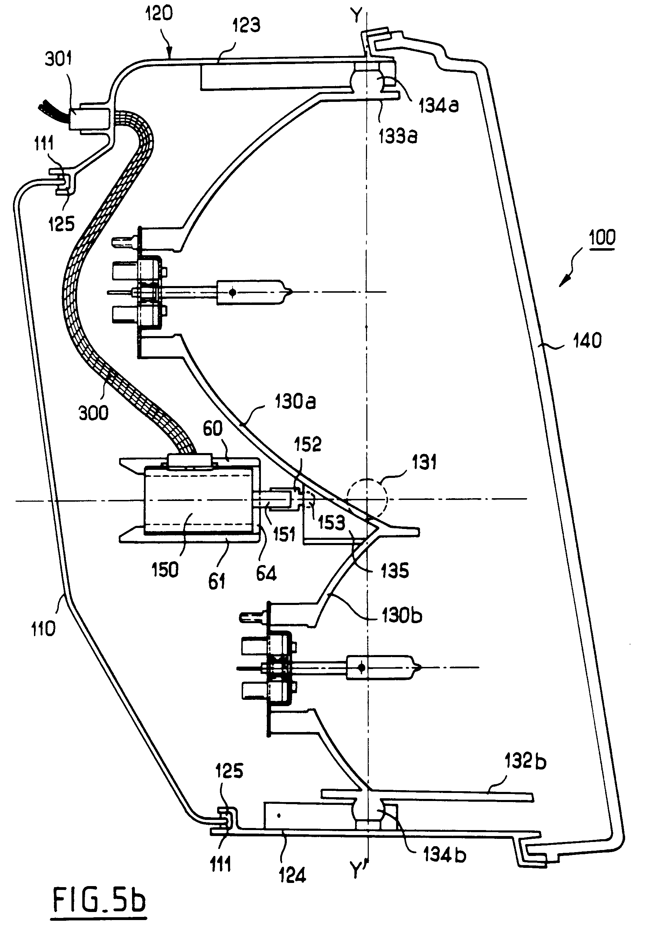

Comme on peut le voir sur les figures 5a et 5b, le boîtier de projecteur 120 est fermé à l'arrière par un capot de visite amovible 110. Ce capot de visite 110 présente un bord périphérique 111 légèrement recourbé qui lors de la mise en place dudit capot sur le boîtier vient s'engager dans une nervure périphérique 125 prévue dans l'épaisseur du bord arrière des parois supérieure, inférieure et latérale du boîtier. Ce capot de visite 110 est dans l'exemple montré sur ces figures 5a et 5b indépendant du dispositif correcteur 150 et du moyen de translation, ici la tige filetée 157. Les glissières 60,61, sont solidaires des parois latérales du boîtier de projecteur. La tige filetée 157 est vissée dans un insert 121b solidaire de la paroi supérieure 121 du boîtier de projecteur. En outre, la tige filetée 157 comporte à son extrémité inférieure, située à l'intérieur du boîtier, une tête sphérique 170 engagée dans un logement horizontal 180 prévu sur le dispositif correcteur 150, de façon analogue à la figure 3a. Ainsi, le dispositif correcteur 150 peut être facilement monté et démonté à l'intérieur du boîtier de projecteur après retrait du capot alors que la tige filetée 157 reste maintenue dans son insert 121b. En outre, comme on peut mieux le voir sur la figure 5b, le projecteur comporte un cordon souple d'alimentation et de commande électrique 300 du dispositif correcteur 150, qui est relié audit dispositif correcteur 150 et connecté à l'extérieur du boîtier de projecteur 120 à une alimentation générale du véhicule non représentée. Suivant le mode de réalisation montré sur la figure 5b, le cordon souple 300 débouche vers l'extérieur du boîtier 120 par un passage 301 prévu dans la paroi arrière du boîtier 120.

D'autre part, on observe sur les figures 5a et 5b deux réflecteurs 130a, 130b solidaires l'un de l'autre. Suivant ce mode de réalisation, on remarque que la rotule d'articulation 131 est située en dessous de la joue inférieure du réflecteur 130a, à proximité de la transition entre les deux réflecteurs. La paire de réflecteurs 130a, 130b comprend, sur ses bords latéraux 133a, 133b adjacents et parallèles aux parois latérales 123, 124 correspondantes du boîtier, deux rotules latérales à tête sphérique 134a, 134b montées pivotantes dans deux sièges de rotule prévus sur ces parois. Les deux rotules latérales 134a, 134b sont situées dans le plan horizontal contenant la rotule 131, les trois rotules définissant un axe de pivotement horizontal Y-Y' des réflecteurs passant par leurs centres. Ces rotules assurent le maintien des réflecteurs en autorisant un pivotement autour de l'axe Y-Y' dans le but de faire varier l'inclinaison en site des faisceaux lumineux. En outre, les rotules 134a, 134b peuvent légèrement coulisser vers la gauche ou vers la droite sur les parois latérales correspondantes pour permettre un pivotement des réflecteurs autour de l'axe Z-Z' dans le but de faire varier l'inclinaison en azimut des faisceaux lumineux. A ce sujet, il est intéressant de remarquer que la rotule 131 constituant un point fixe dans le boîtier de projecteur est placée dans une région basse du boîtier de projecteur, plutôt au centre dudit boîtier vers l'avant des réflecteurs, ce qui permet, d'une part lors du réglage en azimut de répartir et limiter les débattements latéraux gauche et droite des deux rotules latérales, et d'autre part lors du réglage en site de déplacer très peu la partie inférieure desdits réflecteurs en déplaçant plutôt la partie supérieure. Ainsi, les changements d'orientation des réflecteurs à l'intérieur du boîtier de projecteur sont pratiquement invisible de l'extérieur. Par ailleurs, suivant le mode de réalisation des figures 5a et 5b, l'arbre de sortie rotatif 151 du dispositif ou module correcteur 150 s'étend ici horizontalement à une hauteur voisine de celle de l'axe Y-Y'. Sur ces figures on observe également un moyen de transmission qui est monté entre l'arbre rotatif et une partie 135 des réflecteurs en prolongement vers l'arrière à partir d'une région d'articulation autour de l'axe Y-Y'. Les parois portant les glissières 60,61 et/ou une paroi transversale 64 s'étendant entre les deux glissières 60,61 constituent un moyen d'écran thermique entre le dispositif correcteur 150 et les réflecteurs 130a, 130b. En effet, dans un esprit de gain de place, le dispositif correcteur 150 est placé tout près des réflecteurs dont les lampes dégagent une certaine chaleur. Ainsi, il est avantageux d'isoler thermiquement des réflecteurs le dispositif correcteur 150 qui comporte un moteur électronique.

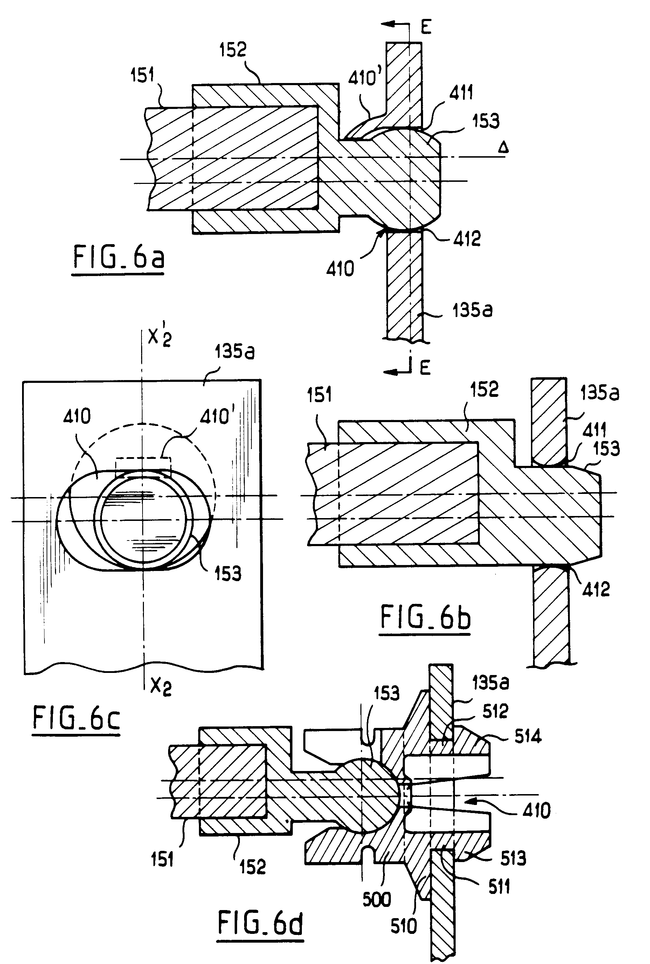

Plus particulièrement, comme le montrent mieux les figures 6a, 6b, 6c et 6d, le moyen de transmission comprend un corps 152 portant une tête de rotule 153. Le corps 152 de la rotule est monté sur l'arbre de sortie 151, et la tête 153 est disposée de façon excentrée par rapport à l'axe de rotation de l'arbre de sortie 151. La tête 153 est engagée dans une ouverture oblongue 410 ménagée dans une plaque de transmission 135a perpendiculaire à l'axe de rotation de l'arbre de sortie 151 et solidaire de la partie 135 en prolongement vers l'arrière des réflecteurs jumelés. La rotation de l'arbre de sortie 151 entraîne le déplacement circulaire de la tête de rotule 153, qui glisse dans l'ouverture oblongue 410. Par suite la plaque de transmission 135a est déplacée suivant l'axe vertical X₂-X'₂ par la composante verticale du mouvement circulaire afin de faire pivoter les réflecteurs 130a, 130b associés autour de l'axe Y-Y' pour faire varier l'angle d'inclinaison en site du faisceau lumineux. Là encore, pour effectuer le réglage du zéro, il suffit de tourner la tige filetée 157, ce qui provoque le déplacement vertical du dispositif correcteur et de la rotule 152.

Dans le mode de réalisation de la figure 6a, la tête 153 de la rotule présente une forme sphérique et les bords parallèles 411, 412 de l'ouverture oblongue 410 sont des bords droits.

Dans le mode de réalisation de la figure 6b, la tête 153 de la rotule présente une forme cylindrique à section droite et comporte une extrémité chanfreinée. Les bords parallèles 411, 412 de ladite ouverture 410 sont de forme arrondie dans le sens de l'épaisseur de la plaque de transmission 135a.

Dans les deux cas, on autorise ainsi les légers décalages angulaires apparaissant lors des changements d'inclinaison des réflecteurs.

De plus, comme on peut mieux le voir sur les figures 6a et 6c, l'ouverture oblongue 410 comporte le long de son bord supérieur 411 une languette élastique 410' qui s'étend à partir de ladite ouverture vers le corps de la rotule 152. Cette languette élastique 410' en contact avec la tête de rotule 153 permet de rattraper les jeux pouvant exister entre la tête de rotule 153 et l'ouverture 410 en maintenant ladite tête en appui sur le bord inférieur parallèle 412 de l'ouverture. Bien entendu, cette languette élastique peut se situer sur le bord inférieur 412 de l'ouverture 410.

Suivant une variante, montrée plus particulièrement sur la figure 6d, la tête sphérique 153 de la rotule est engagée dans un siège de rotule 500 comportant un pied d'encliquetage 510 venant s'engager dans l'ouverture oblongue 410. Ce pied d'encliquetage 510 présente sur sa surface extérieure des languettes élastiques 511, 512 qui se déforment élastiquement en se rapprochant mutuellement lorsque le pied d'encliquetage est engagé dans l'ouverture oblongue 410. De plus, le pied d'encliquetage 510 comporte des dents d'accrochage 513, 514 pour le montage par engagement élastique du siège 500 dans l'ouverture 410.

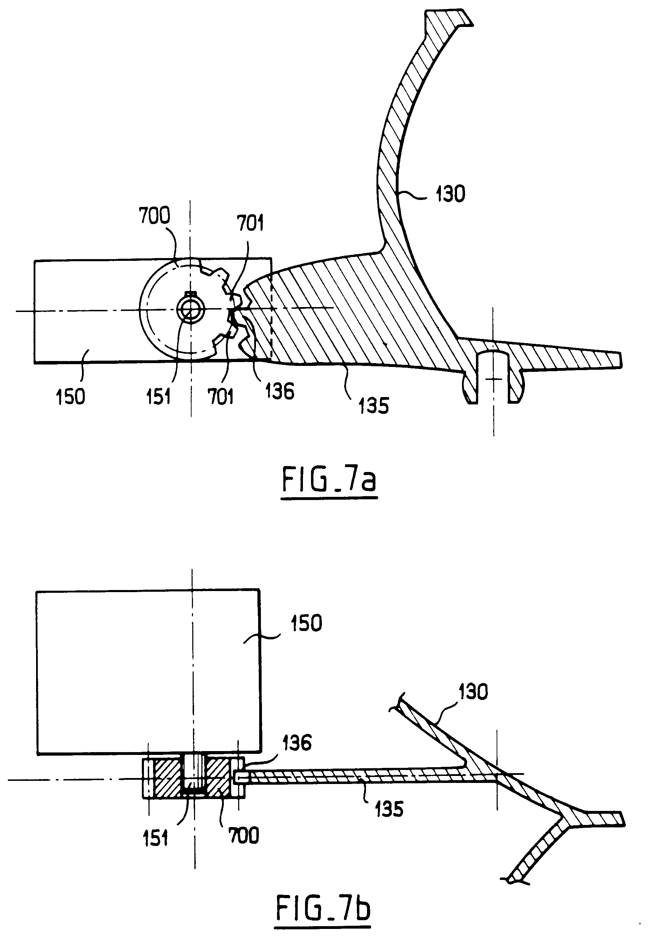

On a représenté sur les figures 7a et 7b, un autre mode de réalisation des moyens de transmission du mouvement rotatif de sortie du dispositif correcteur 150. Ces moyens de transmission comportent un pignon 700 monté sur l'arbre rotatif de sortie 151 qui s'étend horizontalement. Ce pignon est denté sur un demi-périmètre. Les dents 701 du pignon 700 engrènent avec une denture complémentaire 136 solidaire de la partie en prolongement vers l'arrière 135 du réflecteur. Plus précisément, cette denture complémentaire 136 comportant au moins une dent, se situe à l'extrémité arrière de ladite partie 135. Ainsi, le pignon 700, entraîné en rotation par l'arbre rotatif 151, déplace la partie arrière 135 du réflecteur généralement verticalement pour orienter celui-ci en site. On remarque ici que le prolongement vers l'arrière 135 du réflecteur, le fond du réflecteur et la rotule 131 forment un ensemble monobloc en matière plastique par exemple.

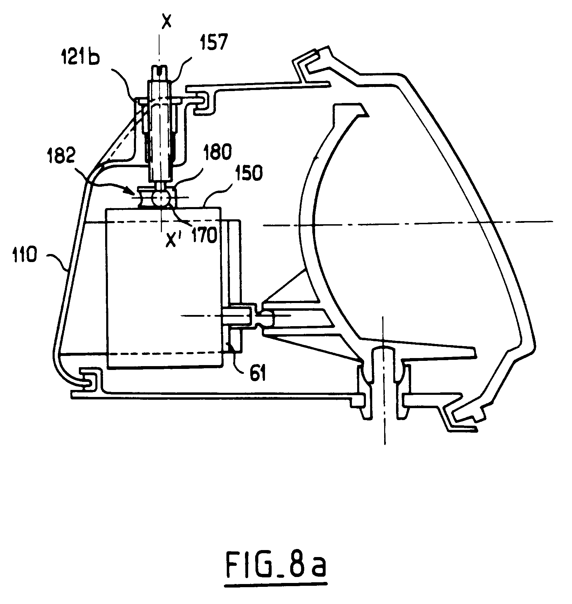

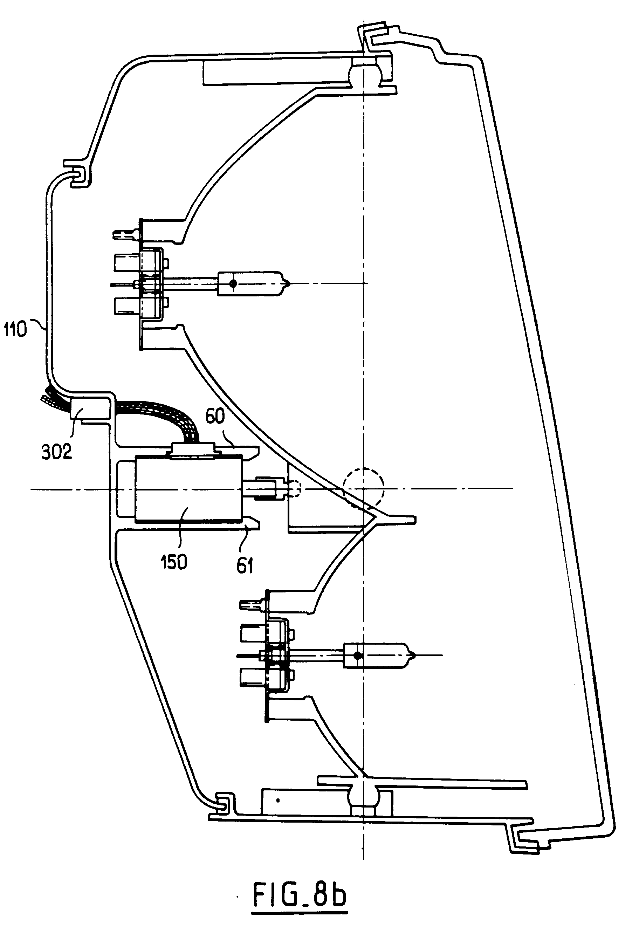

Suivant la variante de réalisation représentée sur les figures 8a et 8b, le dispositif correcteur 150 est monté coulissant sur l'intérieur du capot de visite amovible 110. En effet, comme on peut le voir sur ces figures, les glissières 60,61 sont solidaires du capot 110. En outre, le moyen de translation du dispositif correcteur 150, ici la tige filetée 157, est vissé dans un insert 121b solidaire également du capot de visite 110. Comme on peut le remarquer, le logement horizontal 180 solidaire du dispositif correcteur 150 et destiné à recevoir la tête 170 positionnée à l'extrêmité inférieure de la tige filetée 157, comporte une ouverture terminale 182 tournée vers l'arrière. D'autre part, le cordon souple d'alimentation et de commande électrique 300 du dispositif correcteur 150 débouche vers l'extérieur du boîtier de projecteur 120 à travers un passage 302 ménagé dans le capot de visite 110. Ainsi, lorsque le capot de visite 110 a été retiré du boîtier de projecteur 120, le dispositif correcteur 150 peut être démonté dudit capot vers l'avant, la tête 170 sortant de son logement 180 via l'ouverture 182.

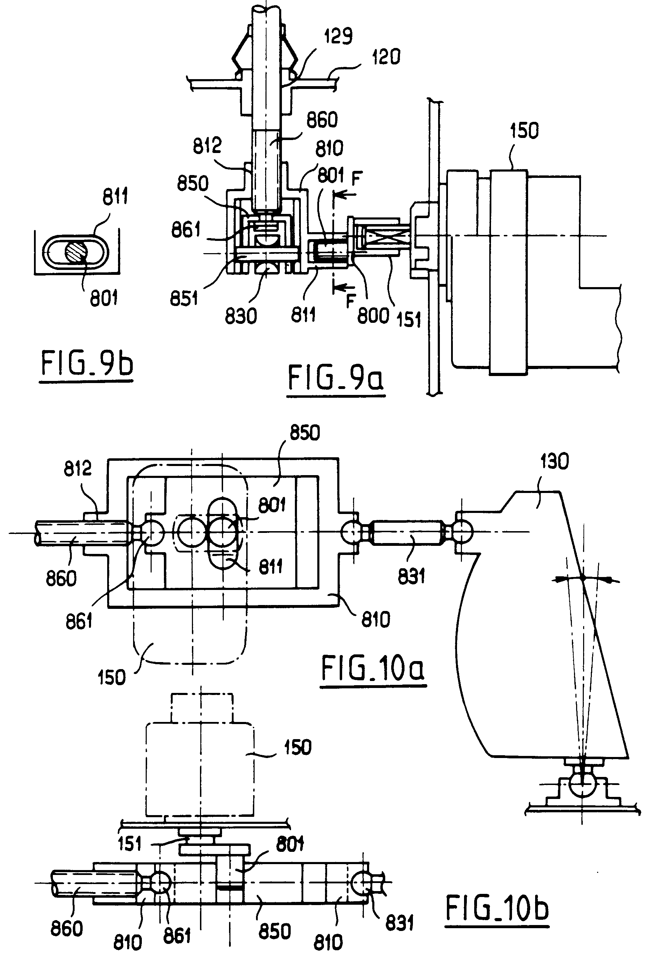

Suivant le mode de réalisation représenté sur les figures 9a et 9b, les moyens de transmission comprennent un manchon 800 portant un doigt 801 disposé de façon excentrée par rapport à l'arbre rotatif de sortie 151 du dispositif correcteur 150. Le moyen de transmission comporte également une chape principale 810 en forme de U et portant une boutonnière 811 qui s'étend latéralement à partir de ladite chape principale et dans laquelle est engagé le doigt 801. Cette boutonnière 811 présente une section de forme oblongue. Lorsque l'arbre rotatif de sortie 151 tourne, la boutonnière 811 se déplace linéairement et entraîne dans son mouvement la chape principale 810, convenablement guidée. La chape principale 810 guide elle-même une chape secondaire 850 en forme de U de plus petite taille montée coulissante à l'intérieur de ladite chape principale. Cette chape secondaire 850 supporte un axe 851 prisionnier dans à une fourchette 830. Cette fourchette 830 fait partie d'une pièce de liaison qui s'étend par exemple horizontalement entre l'ensemble constitué par les deux chapes et l'arrière du réflecteur. D'autre part, la chape secondaire 850 est reliée à l'extrémité 861 d'une vis 860 engagée dans un taraudage de la chape principale 810. La vis 860 traverse par ailleurs librement, en pouvant tourner et coulisser, une ouverture 129 formée dans le boîtier 120. Une rotation manuelle de la vis 860 permet de faire varier la position mutuelle des chapes 810, 850 et donc, pour une position donnée du doigt 801, l'orientation en site du réflecteur. La vis 860 permet donc, lorsque le dispositif correcteur n'est pas en service, d'effectuer le réglage du zéro. Lorsque le correcteur est en fonctionnement, la rotation de son arbre de sortie 151 provoque le déplacement à l'unisson des chapes 810, 850, reliées entre elles par la vis 860, pour corriger l'orientation en site du faisceau via la fourchette 830 et l'élément de liaison.

Selon une variante du mode de réalisation des figures 9a et 9b, comme on peut le voir sur les figures 10a et 10b, la chape secondaire 850 comporte la boutonnière 811 dans laquelle est engagé le doigt 801 monté excentré sur l'arbre rotatif de sortie 151 du dispositif correcteur 150. La chape secondaire 850 est entraînée dans un mouvement linéaire par l'intermédiaire du doigt 801 associé à la boutonnière 811. Il convient de préciser que la chape secondaire 850 comporte sur ses bords extérieurs une glissière sur laquelle coulisse la chape principale 810, en forme de cadre. La chape secondaire 850 et la chape principale 810 sont reliées par l'intermédiaire de la vis 860 de réglage du zéro. De plus, la chape principale 810 est reliée à une biellette 831 montée sur l'arrière du réflecteur 130. Ainsi, lorsque le dispositif correcteur 150 est en marche, les deux chapes sont déplacées à l'unisson et la biellette 831 transmet ce mouvement linéaire au réflecteur. Lorsque le dispositif correcteur est arrêté et bloqué par des moyens d'encliquetage, pour amener le faisceau lumineux dans son inclinaison de référence il suffit d'actionner manuellement la vis 860 qui modifie la position de la chape principale 810 sur la chape secondaire 850, pour actionner le réflecteur par l'intermédiaire de la biellette 831.

On conviendra que les différents modes de réalisation représentés sur les figures décrites peuvent se combiner les uns avec les autres.

## Revendications

1. Projecteur pour véhicule automobile, comprenant à l'intérieur d'un boîtier de projecteur (120), d'une part un réflecteur (130) muni d'une lampe pour former un faisceau lumineux, et d'autre part un dispositif correcteur motorisé (150) relié au réflecteur par un moyen de liaison (151, 154, 156 ; 151, 152, 153 ; 135, 151, 152 ; 153, 500, 135 ; 151, 700, 135) afin de faire varier l'inclinaison en site dudit faisceau par rapport à une inclinaison de référence, notamment en fonction des variations d'assiette du véhicule, un moyen (157 ; 159 ; 160 ; 190), actionnable manuellement, étant prévu pour translater le dispositif correcteur (150) de manière à amener le faisceau dans son inclinaison de référence lorsque le dispositif correcteur (150) n'est pas en service, caractérisé en ce que le dispositif correcteur (150) est monté coulissant suivant une direction verticale de coulissement (X-X') dans le boîtier de projecteur (120) et en ce que ledit moyen (157 ; 159 ; 160 ; 190), actionnable manuellement, s'étendant dans ladite direction verticale de coulissement coopére directement avec un organe (170 ; 62a ; 161 ; 200) relié au dispositif correcteur (150), pour déplacer en translation ledit organe (170 ; 62a ; 161 ; 200) selon ladite direction verticale de coulissement (X-X') et par là même ledit dispositif correcteur (150).

2. Projecteur selon la revendication 1, caractérisé en ce que le moyen de translation comprend une tête ( 170) engagée dans un logement (180) formé sur le dispositif correcteur et un moyen pour déplacer la tête dans la direction verticale de coulissement.

3. Projecteur selon la revendication 2, caractérisé en ce que le logement présente une ouverture ( 181 ) pour l'introduction de la tête (170) dans ledit logement suivant une direction généralement horizontale, lors de la mise en place du dispositif correcteur.

4. Projecteur selon la revendication 3, caractérisé en ce qu'une partie du boîtier est constituée par un capot arrière (110) fermant une ouverture, en ce que le dispositif correcteur (150) est monté dans le boitier par ladite ouverture et en ce que l'ouverture (181) du logement (180) est tournée vers l'avant.

5. Projecteur selon la revendication 3, caractérisé en ce qu'une partie du boîtier est constituée par un capot arrière (110) fermant une ouverture, en ce que le dispositif correcteur (150) et le moyen de translation (157) sont montés sur le capot, en ce que le dispositif correcteur est mis en place sur ledit capot d'avant en arrière et en ce que l'ouverture (181) du logement (180) est tournée vers l'arrière.

6. Projecteur selon l'une des revendications 1 à 5, caractérisé en ce que le moyen de translation comprend un élément tournant pourvu d'une tige filetée (157) engagée dans un taraudage solidaire du boitier (120).

7. Projecteur selon l'une des revendication 1 à 5, caractérisé en ce que le moyen de translation comprend un élément tournant monté pivotant sur le boitier et pourvu d'une vis sans fin (160), en prise avec une crémaillère (161) reliée au dispositif correcteur.

8. Projecteur selon la revendication 1, caractérisé en ce que le moyen de translation comprend un élément tournant monté pivotant sur le boitier, ledit élément comportant une tige (159) pourvue d'au moins une rampe inclinée (159a), et au moins un doigt (62a) solidaire du dispositif correcteur coopérant avec ladite rampe.

9. Projecteur selon la revendication 1, caractérisé en ce que le moyen de translation comprend un élément tournant (190) monté pivotant sur le boitier et comportant un taraudage ouvert à une extrémité libre, et une tige filetée (200) bloquée en rotation sur le dispositif correcteur et engagée dans ledit taraudage.

10. Projecteur selon la revendication 9, caractérisé en ce que l'élément tournant comprend des moyens élastiques (191,192) de verrouillage en translation, coopérant avec une paroi (121) du boitier (120) dans la région d'une ouverture traversée par ledit élément tournant.

11. Projecteur selon l'une des revendications 6 à 10, caractérisé en ce que l'élément tournant comprend une partie d'actionnement située à l'extérieur du boîtier.

12. Projecteur selon l'une des revendications 1 à 11, caractérisé en ce que le dispositif correcteur est monté coulissant à l'aide d'un élément de support (62) dont deux bords opposés sont engagés dans des glissières (60,61) formées à l'intérieur du boîtier de projecteur.

13. Projecteur selon l'une des revendications 1 à 12, caractérisé en ce que le moyen de translation est également un moyen de blocage en coulissement du dispositif correcteur (150).

14. Projecteur selon l'une des revendications 1 à 13, caractérisé en ce que le dispositif correcteur et le moyen de translation sont montés sur un capot du boîtier.

15. Projecteur selon l'une des revendications 1 à 14, caractérisé en ce qu'il comporte des moyens formant écran thermique entre le dispositif correcteur (150) et le réflecteur (130).

16. Projecteur selon la revendication 15, caractérisé en ce que les moyens formant écran thermique sont constitués par des parois portant les glissières latérales (60,61) du dispositif correcteur (150).

17. Projecteur selon l'une des revendications 15 ou 16, caractérisé en ce que les moyens formant écran thermique comprennent une paroi transversale (64) s'étendant entre les deux glissières (60,61).

## Claims

1. Headlight for a motor vehicle, comprising, inside a headlight casing (120), on the one hand a reflector (130) provided with a lamp in order to form a light beam, and on the other hand a motorised corrective device (150) connected to the reflector by a connecting means (151, 154, 156; 151, 152, 153; 135, 151 152; 153, 500, 135; 151, 700, 135) in order to vary the elevational inclination of the said beam with respect to a reference inclination, notably in accordance with the variations in inclination of the vehicle, a manually actuatable means (157; 159; 160; 190) being provided to move the corrective device (150) in translation so as to bring the beam into its reference inclination when the corrective device (150) is not in operation, characterised in that the corrective device (15) is mounted so as to side in a vertical sliding direction (X-X') in the headlight casing (120) and in that the said manually actuatable means (157; 159; 160; 190), extending in the said vertical sliding direction, cooperates directly with a member (170; 62a; 161; 200) connected to the corrective device (150), in order to move the said member (170; 62a; 161; 200), and by the same token the said corrective device (150), in translation in the said vertical sliding direction (X-X').

2. Headlight according to Claim 1, characterised in that the translation means comprises a head (170) engaged in a housing (180) formed on the corrective device and a means for moving the head in the vertical sliding direction.

3. Headlight according to Claim 2, characterised in that the housing has an aperture (181) for the insertion of the head (170) in the said housing in a generally horizontal direction during the fitting of the corrective device.

4. Headlight according to Claim 3, characterised in that part of the casing consists of a rear cover (110) closing an aperture, in that the corrective device (150) is mounted in the casing through the said aperture and in that the aperture (181) in the housing (180) is turned to the front.

5. Headlight according to Claim 3, characterised in that part of the casing consists of a rear cover (110) closing an aperture, in that the corrective device (150) and the translation means (157) are mounted on the cover, in that the corrective device is positioned on the said cover from front to roar and in that the aperture (181) in the housing (180) is turned to the rear.

6. Headlight according to one of Claims 1 to 5, characterised in that the translation means comprises a rotating element provided with a threaded rod (157) engaged in an internal thread integral with the casing (120).

7. Headlight according to one of Claims 1 to 5, characterised in that the translation means comprises a rotating element mounted pivotally on the casing and provided with an endless screw (160), engaged with a rack (161) connected to the corrective device.

8. Headlight according to Claim 1, characterised in that the translation means comprises a rotating element mounted pivotally on the casing, the said element having a rod (159) provided with at least one inclined ramp (159a) and at least one finger (62a) integral with the corrective device cooperating with the said ramp.

9. Headlight according to Claim 1, characterised in that the translation means comprises a rotating element (190) mounted pivotally on the casing and having an internal thread open at a free end, and a threaded rod (200) looked in rotation on the corrective device and engaged in the said internal thread.

10. Headlight according to Claim 9, characterized in that the rotating element comprises elastic means (191, 192) for locking in translation, cooperating with a wall (121) of the casing (120) in the region of an aperture through which the said rotating element passes.

11. Headlight according to one of Claims 6 to 10, characterised in that the rotating element comprises an actuating part situated outside the casing.

12. Headlight according to one of Claims 1 to 11, characterised in that the corrective device is mounted so as to slide with the aid of a support element (62) whose two opposite edges are engaged in slides (60, 61) formed inside the headlight casing.

13. Headlight according to one of Claims 1 to 12, characterised in that the translation means is also a means for locking the corrective device (150) with respect to sliding.

14. Headlight according to one of Claims 1 to 13, characterised in that the corrective device and the translation means are mounted on a cover of the casing.

15. Headlight according to one of Claims 1 to 14, characterised in that it has means forming a thermal screen between the corrective device (150) and the reflector (130).

16. Headlight according to Claim 15, characterised in that the means forming a thermal screen consist of balls carrying lateral slides (60, 61) of the corrective device.

17. Headlight according to one of Claims 15 or 16, characterised in that the means forming a thermal screen comprise a transverse wall (64) extending between the two slides (60, 61).

## Patentansprüche

1. Scheinwerfer für Kraftfahrzeuge, der im Innern eines Scheinwerfergehäuses (120) einerseits einen Reflektor (130) mit einer Lampe zur Erzeugung eines Lichtbündels und andererseits eine motorbetriebene Korrektureinheit (150) umfaßt, die über ein Verbindungsmittel (151; 154, 156; 151, 152, 153; 135, 151, 152; 153, 500, 135; 151, 700, 135) mit dem Reflektor verbunden ist, um die höhenwinkelmäßige Neigung des besagten Lichtbündels im Verhältnis zu einer Bezugsneigung zu verändern, insbesondere in Abhängigkeit von den Neigungsveränderungen der Fahrzeugkarosserie, wobei eine handbetätigte Einrichtung (157; 159; 160; 190) vorgesehen ist, um die Korrektureinheit (150) so zu verstellen, daß das Lichtbündel in seine Bezugsneigung verbracht wird, wenn die Korrektureinheit (150) nicht eingeschaltet ist , **dadurch gekennzeichnet,** daß die Korrektureinheit (150) entlang einer vertikalen Verschieberichtung (X-X') im Scheinwerfergehäuse (120) verschiebbar gelagert ist und daß die besagte handbetätigte Einrichtung (157; 159; 160; 190), die sich in der besagten vertikalen Verschieberichtung erstreckt, direkt mit einem Organ (170; 62a; 161; 200) zusammenwirkt, das mit der Korrektureinheit (150) verbunden ist, um das besagte Organ (170; 62a; 161; 200) und damit auch die besagte Korrektureinheit (150) entlang der besagten vertikalen Verschieberichtung (X-X') geradlinig zu bewegen.

2. Scheinwerfer nach Anspruch 1, **dadurch gekennzeichnet,** daß die Verstelleinrichtung einen Kopf (170), der in eine an der Korrektureinheit ausgebildete Aufnahme (180) eingesetzt ist, und ein Mittel zur Verschiebung des Kopfes in der vertikalen Verschieberichtung umfaßt.

3. Scheinwerfer nach Anspruch 2, **dadurch gekennzeichnet,** daß die Aufnahme eine Öffnung (181) aufweist, um den Kopf (170) bei der Anbrindung der Korrektureinheit entlang einer allgemein horizontalen Richtung in die besagte Aufnahme einzusetzen.

4. Scheinwerfer nach Anspruch 3, **dadurch gekennzeichnet,** daß ein Teil des Gehäuses aus einer rückseitigen Abdeckhaube (110) besteht, die eine Öffnung verschließt, daß die Korrektureinheit (150) durch die besagte Öffnung in das Gehäuse eingebaut wird und daß die Öffnung (181) der Aufnahme (180) nach vorn gerichtet ist.

5. Scheinwerfer nach Anspruch 3, **dadurch gekennzeichnet,** daß ein Teil des Gehäuses aus einer rückseitigen Abdeckhaube (110) besteht, die eine Öffnung verschließt, daß die Korrektureinheit (150) und die Verstelleinrichtung (157) an der Abdeckhaube angebracht sind, daß die Korrektureinheit von vorn nach hinten an der besagten Abdeckhaube angebracht wird und daß die Öffnung (181) der Aufnahme (180) nach hinten gerichtet ist.

6. Scheinwerfer nach einem der Ansprüche 1 bis 5, **dadurch gekennzeichnet,** daß die Verstelleinrichtung ein drehbares Element mit einem Außengewindestift (157) enthält, der in ein fest mit dem Gehäuse (120) verbundenes Innengewinde eingesetzt ist.

7. Scheinwerfer nach einem der Ansprüche 1 bis 5, **dadurch** **gekennzeichnet**, daß die Verstelleinrichtung ein drehbares Element enthält, das schwenkbar am Gehäuse gelagert und mit einer Schnecke (160) versehen ist, die an einer mit der Korrektureinheit verbundenen Zahnstange (161) eingreift.

8. Scheinwerfer nach Anspruch 1, **dadurch gekennzeichnet,** daß die Verstelleinrichtung ein drehbares Element enthält, das schwenkbar am Gehäuse gelagert ist, wobei das besagte Element einen Stift (159) mit mindestens einer geneigten Rampe (159a) und mindestens einen Finger (62a) umfaßt, der fest mit der Korrektureinheit verbunden ist und mit der besagten Rampe zusammenwirkt.

9. Scheinwerfer nach Anspruch 1, **dadurch gekennzeichnet,** daß die Verstelleinrichtung ein drehbares Element (190), das schwenkbar am Gehäuse gelagert ist und ein an einem freien Ende offenes Innengewinde umfaßt, sowie einen Außengewindestift (200) enthält, der an der Korrektureinheit gegen Verdrehung gesichert und in das besagte Innengewinde eingesetzt ist.

10. Scheinwerfer nach Anspruch 9, **dadurch gekennzeichnet,** daß das drehbare Element elastische Verriegelungsmittel (191, 192) gegen eine geradlinige Verschiebung umfaßt, die mit einer Wand (121) des Gehäuses (120) im Bereich einer Öffnung zusammenwirken, durch die das besagte drehbare Element hindurchgeht.

11. Scheinwerfer nach einem der Ansprüche 6 bis 10, **dadurch gekennzeichnet,** daß das drehbare Element einen außerhalb des Gehäuses angeordneten Betätigungsteil umfaßt.

12. Scheinwerfer nach einem der Ansprüche 1 bis 11, **dadurch gekennzeichnet,** daß die Korrektureinheit anhand eines Halterungselements (62) verschiebbar gelagert ist, von dem zwei gegenüberliegende Kanten in Gleitführungen (60, 61) eingreifen, die im Innern des Scheinwerfergehäuses ausgebildet sind.

13. Scheinwerfer nach einem der Ansprüche 1 bis 12, **dadurch gekennzeichnet,** daß durch die Verstelleinrichtung die Korrektureinheit (150) außerdem gegen Verschiebung gesichert ist.

14. Scheinwerfer nach einem der Ansprüche 1 bis 13, **dadurch gekennzeichnet,** daß die Korrektureinheit und die Verstelleinrichtung an einer Abdeckhaube des Gehäuses angebracht sind.

15. Scheinwerfer nach einem der Ansprüche 1 bis 14, **dadurch gekennzeichnet,** daß er Mittel umfaßt, die einen Wärmeschutz zwischen der Korrektureinheit (150) und dem Reflektor (130) bilden.

16. Scheinwerfer nach Anspruch 15 , **dadurch gekennzeichnet,** daß die Mittel, die einen Wärmeschutz bilden, aus Wänden bestehen, welche die seitlichen Gleitführungen (60, 61) der Korrektureinheit (150) tragen.

17. Scheinwerfer nach einem der Ansprüche 15 oder 16, **dadurch gekennzeichnet,** daß die Mittel, die einen Wärmeschutz bilden, eine Querwand (64) umfassen, die sich zwischen den beiden Gleitführungen (60, 61) erstreckt.
